# EUROPEAN PATENT APPLICATION

(11) **EP 4 657 024 A1**
(43) Date of publication of application: **03.12.2025**
(21) Application number: 25178867.5
(22) Date of filing: 26.05.2025
(51) Int. Cl.: G01C 21/36, G02B 27/01, G06F 3/01, G06T 19/00, G06V 20/20

(54) **METHOD FOR PRODUCING, ORGANIZING AND DISTRIBUTING MOBILE GEOREFERENCED DIGITAL CONTENTS, AND RELATED METHOD FOR DEVELOPING CONTEXTUAL MULTIMEDIA GUIDES, BY USING ARTIFICIAL INTELLIGENCE AND DIGITAL AND/OR VIRTUAL GEOLOCALIZED MAPS**

(30) Priority: 28.05.2024 IT 202400012100
(71) Applicant: Carraro Lab S.r.l., 25036 Palazzolo sull'Oglio (BS) (IT)
(72) Inventor: CARRARO, Gualtiero, I-25026 Palazzolo Sull'Oglio, BRESCIA (IT); CARRARO, Roberto, I-25036 Palazzolo Sull'Oglio, BRESCIA (IT)
(74) Representative: Brunazzi, Stefano

(57) **Abstract**

A method is described for producing, organizing and distributing mobile georeferenced digital content, carried out by means of electronic processing.

The method comprises providing or accessing at least one geolocated digital map, adapted to provide a three-dimensional visual model, and/or comprising other digital multimedia content, of each of a plurality of points of interest present in a geographical area covered by the geolocated digital map.

The method then comprises the steps of obtaining or determining geolocation data of a user, comprising at least one position of the user and information relating to the movement of the user; and also of determining, based on said geolocation data of the user, a digital point of view of the user, within the geolocated digital map, representative of a real point of view of the user in real space, dynamically variable depending on the movement of the user.

Said digital point of view is associated with at least one of said three-dimensional models present in the geolocated digital map, corresponding to points of interest visible from the real point of view of the user.

The method then provides for generating by means of artificial intelligence, and/or deriving from the geolocated digital map, digital data of points of interest, comprising at least one three-dimensional visual model and/or other digital multimedia content relating to at least one of said points of interest associated with the digital point of view of the user. Said digital data of points of interest are dynamically variable depending on the movement of the user.

The method finally comprises the step of organizing and providing to the user, through a digital display interface of a user's mobile device, said digital data of points of interest, dynamically variable, generated and/or derived, associated with the digital point of view of the user.

A corresponding method for the development of contextual multimedia guides is also described.

A corresponding system for producing, organizing and distributing mobile georeferenced digital content is also described.

## Description

### TECHNOLOGICAL BACKGROUND OF THE INVENTION

### Field of the invention

The present invention generally pertains to the technical field of the production, organization and distribution of mobile georeferenced digital content, carried out by means of electronic processing.

The present invention further relates to the field of the development of contextual multimedia guides by means of artificial intelligence and the use of geolocated digital maps, in particular to the development of contextual multimedia tourist guides, generated by Artificial Intelligence based on parameters of position, direction, speed of the user and on the recognition of visual and informative elements present in virtual maps and in geolocated historical or project-based reconstructions.

### Description of the prior art

The field of digital tourist guides is an application area enabled by the spread of mobile devices equipped with GPS or other georeferencing systems, from navigators to smartphones, tablets, and "smart glasses".

The sectors of greatest use are tourism and cultural heritage, but there are also contextual applications in the fields of marketing, services, construction and building, transport or others.

The state of the art includes solutions that allow content to be delivered to users according to rather elementary logics, linked to points of interest located in the territory or on a map, or according to sequential itineraries, without a specific methodology dedicated to the production, organization and distribution of the content.

On the other hand, tourist guide systems based on "computer vision" techniques are spreading, which, although recognizing monuments, do not take into account relevant factors such as the user's speed of movement, or the scale of importance of the points of interest present, or the availability of reconstructions of the past and future of the surrounding environment, and therefore fail to meet the aforementioned needs and leave the aforementioned technical problems unresolved.

Among the various technical problems not solved by known solutions, one may also cite the issue concerning attention to ergonomic and safety aspects of a user in motion, whether on foot, on two or four wheels: the users in motion need to keep their sight engaged in controlling the environment, without being distracted from driving or from the path by written messages, visual messages or interactive interfaces whether touch-based, graphical or gestural.

Furthermore, the difficulty of developing content production and management systems that are low-cost and dynamically adaptable, dedicated to the production of content specifically intended for distribution in mobility, is critical.

Although generative Artificial Intelligence models potentially capable of producing relevant content have recently emerged, and although immersive geolocated maps have long been known (for example Google "Street View^{®}", virtual tours or 3D reconstructions), these general technical innovations are to date scarcely considered in the field of production, organization and distribution of mobile georeferenced digital content, and in the field of the development of contextual multimedia guides.

In view of the foregoing, there is therefore a particularly felt need to solve the technical problems outlined above and, more generally, to have effective, flexible and reliable methods for the production, organization and distribution of mobile georeferenced digital content, and for the development of contextual multimedia guides.

These needs, as illustrated above, are not to date fully satisfied by the known available solutions.

### SUMMARY OF THE INVENTION

It is an object of the present invention to provide a method for producing, organizing and distributing mobile georeferenced digital content, carried out by means of electronic processing, which makes it possible to overcome at least partially the drawbacks mentioned above with reference to the prior art, and to meet the aforementioned needs particularly felt in the considered technical field. This object is achieved by means of a method according to claim 1.

Further embodiments of the above-mentioned method are defined in claims 2-10.

It is also an object of the present invention to provide a method for developing contextual multimedia guides, employing the above-mentioned method. This object is achieved by means of a method according to claim 11.

It is also an object of the present invention to provide a corresponding electronic processing system capable of carrying out the above-mentioned methods. This object is achieved by means of a system according to claim 12.

Further embodiments of the above-mentioned system are defined in claims 13-15.

### BRIEF DESCRIPTION OF THE DRAWINGS

Further features and advantages of the method and the system according to the invention will become apparent from the description below of preferred embodiments, given by way of example and not limitation, with reference to the accompanying figures, in which:
- figure 1 is a diagram representing in simplified form the method of the invention, according to one embodiment, illustrating, in particular, interactions between a user's mobile device and an immersive map;
- figure 2 is a simplified schematic representation of the main components of a platform comprised in one embodiment of the system according to the invention, capable of carrying out the above-mentioned method.

### DETAILED DESCRIPTION

A method for producing, organizing and distributing mobile georeferenced digital content is described. The method is carried out by means of electronic processing.

First of all, the method comprises providing or accessing at least one geolocated digital map, adapted to provide a three-dimensional visual model, and/or comprising other digital multimedia content, of each of a plurality of points of interest present in a geographical area covered by the geolocated digital map.

The method then comprises the step of obtaining or determining geolocation data of a user, comprising at least one position of the user and information relating to the movement of the user.

The method further comprises the step of determining, based on said geolocation data of the user, a digital point of view of the user, within the geolocated digital map, representative of a real point of view of the user in real space, dynamically variable depending on the movement of the user.

The aforesaid digital point of view is associated with at least one of said three-dimensional models present in the geolocated digital map, corresponding to points of interest visible from the real point of view of the user.

The method then provides for generating by means of artificial intelligence, and/or deriving from the geolocated digital map, digital data of points of interest, comprising at least one three-dimensional visual model and/or other digital multimedia content relating to at least one of said points of interest associated with the digital point of view of the user.

Such digital data of points of interest are dynamically variable depending on the movement of the user.

The method finally comprises the step of organizing and providing to the user, through a digital display interface of a user's mobile device, said digital data of points of interest, dynamically variable, generated and/or derived, associated with the digital point of view of the user.

In accordance with an embodiment of the method, said step of providing or accessing a geolocated digital map comprises providing or accessing an immersive geolocated digital map and/or a virtual geolocated digital map corresponding to a "digital twin" of what is found in a geographical area represented by the "digital twin".

According to an embodiment of the method, said step of obtaining or determining geolocation data of a user comprises obtaining or determining geolocation data comprising a position of the user, a direction of movement of the user and a speed of the user.

According to an implementation option of said embodiment, said step of determining a digital point of view of the user comprises determining the digital point of view of the user in a dynamically variable manner, based on the position of the user, direction of movement of the user and speed of the user.

In accordance with an embodiment of the method, said step of generating and/or deriving digital data of points of interest comprises deriving the digital data of points of interest from the geolocated digital map.

In accordance with an embodiment of the method, said step of generating and/or deriving digital data of points of interest comprises generating digital data, by means of a trained artificial intelligence model.

In accordance with an embodiment of the method, said step of organizing and providing to the user digital data of points of interest comprises generating and/or organizing and/or managing and/or distributing digital content optimized as a function of the movement/mobility of the user, delivering the data based on the dynamically variable digital point of view corresponding to the real point of view of the user.

According to an implementation option of the aforesaid embodiment, said step of generating and/or organizing and/or managing and/or distributing digital content optimized as a function of the movement/mobility of the user is carried out by means of a "moving content" definition algorithm, which establishes criteria for the production and distribution of mobility-optimized content and customized on the user.

According to an implementation option of said embodiment, the method comprises the further step of producing and disseminating digital content in relation to position, direction, speed of the user.

Further exemplifying the above mentioned implementation option, the generation of the texts is governed by said "moving content definition algorithm" in relation to the speed of the user.

If a city or a valley is crossed by car or by bicycle, and therefore the presence of a point of interest within the user's sight and attention is relatively brief, the texts may be generated in such a way as to be much shorter than those produced for a user walking along the same path, and thus covering it more slowly.

If the speed is high, the method will appropriately provide only texts relating to the highest scale of importance, for example a generic description of the landscape, the city or the valley, with brief possible references to the square.

On the other hand, if the speed is low, the method will appropriately provide also content for more specific details corresponding to a lower scale of importance, for example the buildings that are present.

In the event that the speed becomes zero, i.e., the user is stationary, the method provides for proceeding with more in-depth levels and therefore with long and detailed texts.

According to another implementation option of the aforesaid embodiment, the method comprises the further step of producing and disseminating digital content as a function of interests indicated by the user, by means of a trained artificial intelligence model.

According to some possible implementation options of said embodiment, the organization of the content generated by Artificial Intelligence is hierarchical, and/or the organization of the content generated by Artificial Intelligence takes into account a predefined scale of geographical importance and/or the organization of the content generated by Artificial Intelligence is multilingual and/or the organization of the content generated by Artificial Intelligence is such as to adapt to different narrative registers or presentation registers, dependent on the user.

For example, the method provides information in a manner dependent on the age and/or the cultural level and/or the cultural tradition of the user.

According to one implementation example, the model is trained to describe a church differently if the user is Western and of Christian tradition, compared to the case of a Middle Eastern user of Islamic tradition. In the first case the functions of the parts of a church may be taken for granted, in the second case it is appropriate to distinguish and describe, for example, the function of a bell tower as compared with a minaret, and likewise it will not be necessary to explain what a saint or a patron is - who gives the name to the church - for Western users, whereas it is appropriate not to assume it for Islamic users. As can be easily understood, a conceptually similar but "dual" approach to the above is applied for the description of a mosque.

According to an implementation example, the model is trained to illustrate a point of interest with a different narrative register if the user is a child compared to the narrative register used for an adult.

With reference to the above-mentioned organization of the content dependent on a predefined scale of importance, this consists, in one implementation example, in managing the hierarchy, in terms of a "scale of importance" code, of the points of interest identified in the context (for example, according to a geographical hierarchy/scale of importance: city-square-building-portal).

In accordance with an embodiment of the method, said digital data of points of interest comprise descriptive data of the present appearance of one or more points of interest, or of all the points of interest visible from the point of view of the user.

In accordance with an embodiment of the method, said digital data of points of interest comprise descriptive data of the past appearance of one or more points of interest, or of all the points of interest visible from the point of view of the user, at a given time period, based on geolocated computer graphics image reconstructions and referring to said time period.

In accordance with an embodiment of the method, said digital data of points of interest comprise descriptive data of the future appearance of one or more points of interest, or of all the points of interest visible from the point of view of the user, based on renderings or digital reconstructions associated with a project referring to an area surrounding the point of view of the user.

In accordance with one embodiment, the method comprises a bidirectional interaction between a user's mobile device and said at least one geolocated digital map. In such case, the method comprises the further steps of:
- transmitting to electronic processing means, where said at least one geolocated digital map is implemented, by the user's mobile device, said information relating to position, direction and speed of the user;
- obtaining, in said at least one geolocated digital map, a visual recognition, for example by means of Computer Vision, of images and points of interest present in the digital point of view of the user, by said electronic processing means;
- deriving, from said at least one geolocated digital map, information on the elements recognized as present in the digital point of view of the user;
- creating descriptive content, based on said information derived, by said electronic processing means by means of artificial intelligence techniques;
- transmitting to the user's mobile device said created descriptive content, in one or more multimedia modes: audio commentary, text card, images, videos, 3D formats.

It should be noted that the above mentioned embodiment allows to take full advantage of the optional presence of a "computer vision" device available to the user, it being understood that the method of the present invention, in its most general definition and in other embodiments, can be carried out in the absence of and independently from "computer vision" functions (for example, it may also be used by a user who keeps the smartphone in their pocket, without using a camera, and with information transmitted to the user via audio).

In the embodiment considered herein, in which the user for example wears a "smart glass" device or uses a device equipped with a camera and connected to an Al Computer Vision model, information can advantageously be acquired also from the direct recognition of monuments or places.

Also in this case, the use of the above mentioned moving content delivery algorithm remains valid and appropriate, which oversees, for example, the processing of the length of texts and voice audio in relation to the speed of the user, but also in relation to the above-mentioned management of the hierarchy of points of interest (for example, city-square-building-portal) and the generation of the related descriptive texts.

Moreover, even in the case where current monuments are directly recognized by artificial vision, the method, according to an implementation option, is characterized by the correlation and description with reconstructions of the past or future of the environment, which are obviously not visible from the camera framing the present, but only from a parallel virtual environment. In the case of past and future reconstructions, the method provides for transmitting to the user not only textual descriptions but also the images of the reconstructions.

Therefore, in the above mentioned embodiment, the "computer vision" from a camera in the real environment constitutes an alternative and/or additional source of data relating to the surrounding environment, compared with the detection of the presence from a digital or virtual map, in particular thanks to the recognition of buildings or other present elements. Also in this case, the moving content definition algorithm maintains its role in the generation and organization of content with respect to speed, the scale of importance and other described criteria.

According to an embodiment, the method provides for the delivery of content in path simulations with exercise equipment.

More specifically, in this embodiment, the invention comprises a method for producing, organizing and distributing digital content in the context of digital path simulations (for example offered by exercise equipment), carried out by means of electronic processing. Such a method comprises the following steps:
- providing or accessing at least one digital map of a simulated path, adapted to provide a three-dimensional visual model and/or comprising other digital multimedia content, of each of a plurality of points of interest present in the simulated digital path;
- obtaining or determining virtual localization data of a user, comprising at least one position of the user and information relating to the movement of the user with respect to the simulated digital path;
- determining, based on said virtual localization data of the user, a digital point of view of the user, within the digital map of the simulated path, representative of a simulated point of view of the user in the simulated space, dynamically variable depending on the movement of the user on the exercise equipment, wherein said digital point of view is associated with at least one of said three-dimensional models present in the digital map of the simulated path, corresponding to points of interest present in the simulated digital path;
- generating by means of artificial intelligence, and/or deriving from the digital map of the simulated path, digital data of points of interest, comprising at least one three-dimensional visual model and/or other digital multimedia content relating to at least one of said points of interest, wherein the digital data of points of interest are dynamically variable depending on the movement of the user on the exercise equipment;
- organizing and providing to the user, through a digital display interface of a user's mobile device or of the exercise equipment, said digital data of points of interest, dynamically variable, generated and/or derived.

The algorithm that manages the delivery of moving content, in fact, can be applied not only to the physical movement of people in the actual reality but also to the simulation of movement carried out with exercise equipment (for example treadmills, exercise bikes and rowing machines, synchronized with virtual worlds), as provided for in this embodiment.

In these cases, the direction and heading of the movement are normally constrained (the movement is always forward along a linear path) but the content can be generated, organized and delivered taking into account other elements: the position, the distances, the points of view, the speed and the pauses, but also the type of locomotion.

In virtual simulation cases, the visual representation (video, 360 video, 3D, virtual tour) is decoupled and desynchronized from the description (written or vocal) to manage changes in speed and pauses. For example, a user may walk or run on a treadmill or pedal on an exercise bike, at different speeds. Thanks to a monitor or a virtual reality viewer and a sensor, their physical movement activates the visualization of a path, whether natural or urban. A contextual description is also activated, for example an audio guide, which applies the rules of the moving content delivery algorithm.

The descriptions therefore concern the position and the point of view in the represented virtual world, but they change in relation to the speed with which the exercise equipment is operated. Walking, running, pauses determine the length of descriptive texts and audio. Pauses, for example, activate longer insights, not compatible with the speed of running.

The training of the Artificial Intelligence model for the generation of moving content must take into account the different movement experiences corresponding to the exercise equipment: pedestrian locomotion (treadmill), cycling (exercise bike), canoeing (rowing machine). The descriptive character will also consider the point of view, which differs for example on a cycle path compared to a navigable body of water.

A method is illustrated below for the development of contextual multimedia guides, also comprised in the present invention.

This method first provides for carrying out a method for producing, organizing and distributing mobile georeferenced digital content, according to any of the embodiments previously illustrated, to obtain digital data of a plurality of points of interest, associated with a plurality of digital points of view of the user, dynamically variable as a function of the movement of the user.

The method then provides for generating by means of artificial intelligence said contextual multimedia guides, based on parameters of position, direction and speed of the user and on the recognition of visual and informative elements present in immersive and/or virtual geolocated digital maps.

A system is described below for producing, organizing and distributing mobile georeferenced digital content, according to the present invention.

Such a system comprises a user's mobile device equipped with geolocation sensors and electronic processing means, operatively connected to the user's mobile device.

The aforesaid electronic processing means comprise:
- at least one virtual reality and/or immersive map software application, associated with at least one geolocated digital map, configured to provide a three-dimensional visual model, and/or comprising other digital multimedia content, of each of a plurality of points of interest present in a geographical area covered by the geolocated digital map;
- a software application or program capable of implementing an infomobility algorithm, configured to obtain and/or determine and/or interpret geolocation data of a user, comprising at least one position of the user and information relating to the movement of the user, and to determine, based on said geolocation data of the user, a digital point of view of the user, within the geolocated digital map, representative of a real point of view of the user in real space, dynamically variable depending on the movement of the user; said digital point of view is associated with at least one of the three-dimensional models present in the geolocated digital map, corresponding to points of interest visible from the real point of view of the user;
- a trained artificial intelligence model, adapted to generate digital data of points of interest, comprising at least one three-dimensional visual model and/or other digital multimedia content relating to at least one of the points of interest associated with the digital point of view of the user; said digital data of points of interest are dynamically variable depending on the movement of the user.

The aforesaid trained artificial intelligence model is also adapted to organize and provide to the user, through a digital display interface of the user's mobile device, the digital data of points of interest, dynamically variable, generated and/or derived, associated with the digital point of view of the user.

According to an embodiment of the system, said electronic processing means comprise, or consist of, a cloud software platform.

According to an embodiment of the system, said at least one virtual reality software application comprises an immersive geolocated digital map and/or a virtual geolocated digital map corresponding to a "digital twin" of what is found in a geographical area represented by the "digital twin".

According to an implementation option of the system, said at least one virtual reality software application is configured to display current digital reproductions of one or more points of interest or of the surrounding environment, in the present, and/or descriptive data of the past appearance of one or more points of interest, at a given time period, based on geolocated computer graphics image reconstructions and referring to said time period, and/or descriptive data of the future appearance of one or more points of interest, based on renderings or digital reconstructions associated with a project referring to an area surrounding the point of view of the user.

In accordance with an embodiment of the system, the user's mobile device is also equipped with direction and/or speed and/or movement sensors.

According to an embodiment of the system, the user's mobile device is also equipped with at least one camera for visual recognition, and is configured to transmit to the electronic processing means information relating to the position, direction and speed of the user.

In this embodiment, the electronic processing means are also configured to carry out the following actions:
- perform a visual recognition, by means of Computer Vision, of images and points of interest present in the digital point of view of the user;
- derive, from said at least one geolocated digital map, information on the elements recognized as present in the digital point of view of the user;
- create descriptive content, based on said information derived, by means of artificial intelligence techniques;
- transmit to the user's mobile device said created descriptive content.

According to an embodiment of the system, the trained artificial intelligence model is capable of generating and disseminating digital content in real time, based on a data entry by the user or from relevant sources, as a function of interests indicated by the user, and/or with hierarchical organization, and/or taking into account a predefined scale of geographical importance, and/or by multilingual organization of the content and/or by means of different narrative registers or presentation registers, dependent on the user.

In accordance with various possible embodiments, the system is configured to carry out a method according to any of the embodiments of the method previously described.

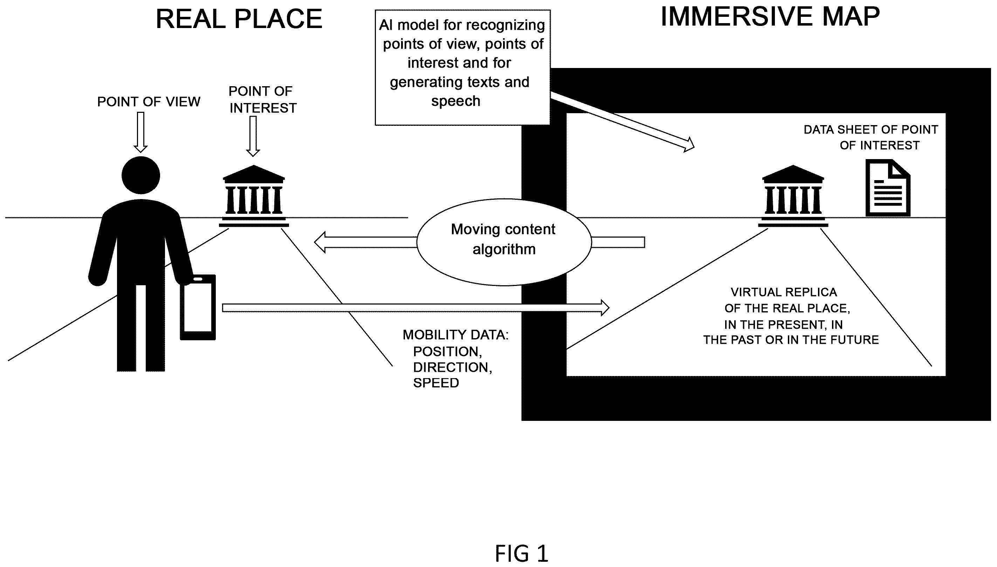

Further detailed application examples of the method according to the invention are described below, by way of example and not limitation, with reference to figures 1-2.

As already illustrated above, the method provides for the introduction of a new cartographic and ergonomic concept, the "Point of View", which differs from the "Point of Interest" that traditionally corresponds to an element located exactly in the geographical coordinates wherein a physical entity is found.

The "Point of View" instead indicates the geographical position, either punctual or areal, where specific content is to be delivered, in reference to what appears in front and is seen by the user in motion.

For example, while the traditional "point of interest" associated with a Cathedral is located exactly at the geographical position of the building, the "Point of View" of the cathedral is located in the square in front of the building: it is at this position that the user will receive the descriptive information of the cathedral itself, such as an audio guide illustrating the architecture, the façade and the features of the monument. In most cases, the "Point of View" corresponds to the optimal observation point from which to enjoy information relating to a "Point of Interest" being observed.

The structured insertion of "Points of View" in a dedicated system makes it possible to build digital tourist guides, in particular voice but also multimedia guides, which offer the user in motion in an urban, road or natural environment, contextual information relevant to what he is seeing, whether geographical, tourist or commercial.

The process of production and organization of the content, according to the present invention, has the following aspects of originality and innovation.

The descriptive and multimedia content must be developed from the observation point of the user in motion and must produce contextual content, optimized to be enjoyed exactly at the "Points of View" identified by algorithmic methodologies and artificial vision systems applied in virtual maps. The method for producing the content must be optimized for the experience of the user moving through the environment.

The generation of texts, performed by a suitably trained generative Artificial Intelligence model, according to one embodiment of the method, takes the form of an immersive script, that is, a script written from the point of view of the user in a specific position of perception of the surrounding environment, but also in a specific direction and at a specific speed of movement.

It should be noted that while the user is moving, the points of view change, and therefore it is necessary to receive information in a dynamic and adaptive manner with respect to three parameters in the embodiment considered here): position, direction, speed of movement.

The multimedia guide experience changes if, for example, one crosses a square starting from one side (looking at the façade of the cathedral), or from the opposite side (looking at the town hall); the experience of a slow pedestrian walk or a fast crossing by car is also different; again, perception (the Point of View) changes with respect to the position: whether one is at the centre of the square, or near the sculptural portal of the cathedral.

It is therefore necessary to develop a method to establish the priority and to organize the distribution and the sequence of contents.

This objective involves the introduction of a further aspect, defined here as "moving content algorithm".

The task of said "moving content algorithm" is to establish the criteria and the order for the distribution of content to the user in motion.

At the "Points of View", thanks to the geolocation of the user obtained from GPS or other systems, the "moving content algorithm" manages the individual informational contents, not only proposing them at the appropriate geographical location, but also distributing them in relation to the direction, speed, criteria and informational priorities established by the system and indicated by the user (themes, expressed interests, weather, traffic, and so on), also taking into account the travel direction.

The main parameters of the aforementioned "moving content algorithm" are therefore the position of the user, the direction and the speed of the user's movement.

According to embodiments of the method, aspects of hierarchy and sequence are considered: scale of geographical and informational importance.

In audio information, the time sequence is a relevant factor.

The use of an importance code (or other specific code) allows the production of content according to a hierarchy corresponding to the geographical scale, and to establish a time sequence in the message, which affects the editorial setting, for example making it possible to manage:
- welcome and introductory instructions of the guide, at the start; in general, beyond the specific descriptions of a single point of interest, it is useful to provide the user in advance with a general overview of the tourist area, or of the historical-artistic period/style of the monuments in the area; in case a presentation of reconstructions of the past or future is also added, it is essential to start with a contextualisation of the historical period or future project that is the subject of the reconstructions;

- general messages on wide-ranging areas (which, based on the level of importance, may precede or follow other messages relating to narrower areas);
- incremental in-depth sequences, also overlapping in the same area, which interact with the user's speed. If the user stops, he/she listens, in the sequence established by the editorial team, to all the messages relating to the area in which he is located. If he moves quickly, he listens only to the primary information and then moves on to that of the neighbouring areas into which he has entered.

The definition of the scale of importance of the content is relevant in order to instruct an Artificial Intelligence model to produce texts with different scale levels, to be distributed in relation to the position, speed and distance of the user from the points of interest.

The training of the artificial intelligence model therefore meets, in one embodiment of the method, the following objectives: writing descriptive texts relating to a tourist path of a user which provide general introductions on the area crossed, fast descriptions in case of crossing on a fast vehicle, in-depth descriptions for slow passages or stops, detailed narratives in the case of close points of view.

Artificial Intelligence, in one embodiment, also manages the delivery time of the content, estimating in real time the crossing speed, and therefore generating textual (audio) segments of the correct duration for that specific pertinent section crossed.

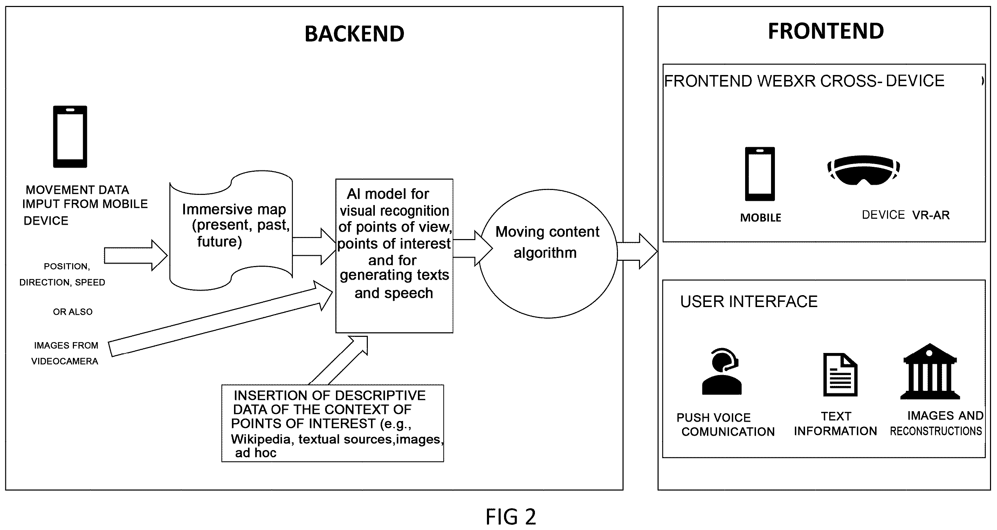

The contents generated by Artificial Intelligence can be multilingual and adapt to various narrative genres and to users with different cultural levels (as illustrated in figure 2, illustrating platform components).

According to some embodiments of the method, it adapts and integrates with different available cartographic options.

The extended reality guide, thanks to dedicated algorithms, generates and delivers different types of information depending on the different types of digital cartography available.

Two types of digital cartographies are mentioned here, distinguishing them, which may today be available as "digital twins" for the creation of guides in extended reality:
- 2D digital cartographies, consisting of geolocated two-dimensional vector maps, and
- 3D digital cartographies consisting of 360° photos and three-dimensional models of the environment, both geolocated.

The 2D digital cartographies allow content to be delivered everywhere, since they today cover practically the entire planet, and thanks to GPS they can always define the position of the point of view with respect to the point of interest.

In 2D cartographies, however, the system is not provided with information on the elevations of buildings, for example the façade of a church. Therefore, the information generated by artificial intelligence will not describe the details of vertical surfaces. Thanks to a dedicated algorithm, artificial intelligence will therefore be able to generate information on the history of the building, on the builders, on the owners, on the events that took place, on its overall shape, on the style, and so on.

If, on the other hand, in addition to the 2D cartography, a cartography with 360° photos, or 3D models is available, for example "street view" or three-dimensional photogrammetry, the platform can recognise, by virtue of artificial intelligence, the vertical parts of the building, and can therefore describe, for example, the façade and its components, such as the portal and the rose window, thus generating a guide more closely related to the actual point of view.

The availability of geolocated photogrammetry also makes possible the exact positioning of 3D models in the environment, for example virtual archaeological reconstructions over the remains of an ancient building, or the 3D model of a house renovation project on the house itself.

Some embodiments of the method provide for various possible customization options.

One of the tasks of the "moving content algorithm" is to manage the rotation of information in a customized mode for the individual user.

Customization occurs thanks to additional system components, in particular the typological classification of content, synchronization with time factors and the personal settings interface.

The classification of content takes place according to a taxonomy aimed at matching the user's interests. For example, in the case of a tourist user, the contents can be organized by artistic, historical, natural attractions, accommodation facilities, tourist services, events, promotional offers.

The user must be able to explicitly indicate, through a personal settings interface, the type of content he wishes to access. When visiting an art city, for instance, the user can select artistic attractions, and the "moving content algorithm" will organize the corresponding "Points of View".

But even when the user has not explicitly customized the types of content, the "moving content algorithm" can automatically organize moving content in a customized form.

Also, a synchronization with clock and calendar allows the "moving content algorithm" to prioritize content customized to the user's position and situation. If, for example, the user is travelling along a coastal road on a summer morning, the "proximity algorithm" may prioritize information about beaches, while for a user travelling the same road in the evening, it may prioritize content on restaurants.

Customization of the "moving content algorithm", applied to a tourist guide to be enjoyed in motion, also allows a tourist passing the same point again to avoid hearing the same information repeatedly.

Another feature present in one embodiment of the method is information rotation. Information rotation allows, for example, the presentation of different information on the same stretch of motorway during the outbound and return journeys.

The speed of movement is also a factor managed by the "moving content algorithm": if the user quickly moves from one local cell to another, the information must not be interrupted. Conversely, if the user is stationary, for example in a traffic jam on the motorway or in front of a museum, the informational units must not be repeated.

According to one embodiment, the audio channel and "text to speech" (push mode and translations) are considered.

The basic ergonomic assumption is the use of the "moving content algorithm" during movement, when the user is engaged in driving a vehicle, on two wheels or while walking.

The user in motion cannot actively interact, read texts or look at images, thus the focus is on privileging the audio channel: the information is read aloud (produced by "Text to Speech" vocal synthesis).

To avoid interfering with driving, the platform delivers the content in PUSH mode, i.e. through automatisms defined by the "proximity algorithm".

A further parameter for content distribution is the time parameter: nighttime, daytime, projection into the past or future of the place, lunchtime or dinnertime, opening hours of functional buildings, and even weather conditions.

Content production makes use of the capabilities offered by Artificial Intelligence, in particular automatic translation and "text to speech" with synthetic pronunciation in multiple languages.

There are also more interactive and less passive fruition scenarios, for example fruition not by the driver but by passengers on board a transport vehicle, or for accessing the content before or after the journey, or if the user stops and wishes to access additional content.

In more interactive consultation modes, the system also allows reading of texts, and provides for the transmission of images, both 2D and 3D, which can be synchronized with the audio.

### Space-time variants of the point of view: "elevator" and "time machine".

In several instances, it may be appropriate to develop spatial or time variants of the "Point of View".

In particular, wherein the human-height view is obstructed by visual disturbances such as trees, walls, or other obstacles, the system can resort to an aerial view, raising the point of view beyond the obstacles and describing what lies beyond.

A further variant of the "Point of View" is of a time nature: if the current appearance of the environment is of little interest, the description can move on to illustrate reconstructions of the past or designs of the future. This may concern, for example, archaeological sites without elevations, which are difficult to interpret for non-experts, or construction sites in progress.

In these cases, the description does not concern the context as it appears today, but as it was in the past or will be in the future.

### Data ingestion and processing of geolocated information.

The training of the artificial intelligence model, and its feeding with data, including real-time data, can occur in various ways.

The simplest is the use of online databases of geolocated information (texts, images or other content).

For example, relevant data acquisition includes Open Source data such as Wikipedia entries, especially those relating to geolocated Points of Interest. Wikipedia provides a vast number of entries not only for locations, but also for individual monuments and attractions. These entries include latitude and longitude, textual descriptions and also images. The textual descriptions, in the form of encyclopaedic entries, will be processed by the Artificial Intelligence model to take on the narrative form relevant to the guide and the "moving content algorithm". The images help to visually identify what appears in front of the user.

The system in any case includes a "Data Ingestion" tool allowing manual input of geolocated information (texts, images, coordinates) relating to any point of interest, whether present in the current environment, in the past or in the future. For example, it will be possible to insert descriptive sheets of Points of Interest in an archaeological site or a construction site, as well as computer graphic reconstructive images of past appearance (virtual archaeology) or future projects (CAD design).

### Artificial vision: applied to an immersive map or via camera.

In the case of using a camera and visual recognition of monuments, the method still deals with the generation and delivery of moving content, in relation to the user's speed and the other criteria described. In the presence of reconstructions of the past or future, the camera cannot provide any information from present-day images, and therefore the method allows for integration of descriptions and images of the reconstructions themselves, in consistency with the aforementioned functionalities.

A further feature of the method for producing, organizing and distributing mobile georeferenced digital content relates to the possibility of delivering content to the user in motion not only based on geographic location, detected via GPS, but also based on visual recognition of the surrounding environment.

In this case, the reference technologies are "visual recognition" and "visual search", activated in two distinct modes:
a) access to a geolocated immersive map replicating the environment in which the user is located (e.g., Google Street View, a virtual tour or a 3D environmental reconstruction). The dynamic geolocation data (position, direction, speed) detected by the device sensor are transmitted to the immersive map, which displays the virtual images corresponding to the real "point of view". Thanks to the visual recognition of virtual images and the presence of a database of points of interest, the system generates the content according to the criteria defined by the "moving content algorithm". For example, if I am walking through the streets of a historic centre, my mobile device detects my position, direction and speed and passes them to the virtual map, which frames the same street I am on and enables recognition of the images and points of interest (e.g., buildings, churches, historical facts...) inserted in the virtual map.
b) a camera that frames objects present in the external environment. In this case, Visual Recognition is applied in the classical way: the system recognises the elements in front of the user and passes the data to the Artificial Intelligence model in charge of generating the content, still according to the criteria defined by the "moving content algorithm" (position, speed, direction), including in the case of descriptions concerning reconstructions of the past and future, not visible in the camera footage.

The application field regards, in both cases mentioned, the following devices:
A. All mobile devices connected to the network and equipped with motion sensors and a microphone
B. All mobile devices connected to the network and equipped with a digital camera, from smartphones to tablets, to dashboard cameras and smart glasses.

As can be seen, the purposes of the present invention, as previously indicated, are fully achieved by the method and system described above, by virtue of the characteristics illustrated in detail.

Indeed, the method and system described above meet the need to solve the technical problems outlined at the beginning of this description and to provide effective, flexible and reliable solutions for the production, organization and distribution of mobile georeferenced digital content, and for the development of contextual multimedia guides.

In particular, the method and the system described above offer a technical solution for producing, organizing and distributing georeferenced digital content, specifically intended for distribution in mobility, at low cost and dynamically adaptable, capable of being provided in ways appropriately adapted to variables such as the movement conditions and speed of the user, the scale of importance of the present points of interest, or others.

To the embodiments of the method, the device and the system described above, a person skilled in the art may make modifications, adaptations and substitutions of elements with others functionally equivalent, without departing from the scope of the following claims. Each of the features described as belonging to a possible embodiment can be implemented independently of the other described embodiments.

## Claims

1. A method for producing, organizing, and distributing mobile georeferenced digital content, carried out by electronic processing, comprising:
- providing or accessing at least one geolocated digital map, adapted to provide a three-dimensional visual model and/or comprising other digital multimedia content, of each of a plurality of points of interest present in a geographical area covered by the geolocated digital map;
- obtaining or determining geolocation data of a user, comprising at least one position of the user and information relating to the movement of the user;
- determining, based on said geolocation data of the user, a digital point of view of the user, within the geolocated digital map, representative of a real point of view of the user in real space, dynamically variable depending on the movement of the user,
wherein said digital point of view is associated with at least one of said three-dimensional models present in the geolocated digital map, corresponding to points of interest visible from the real point of view of the user;
- generating by means of artificial intelligence, and/or deriving from the geolocated digital map, digital data of points of interest, comprising at least one three-dimensional visual model and/or other digital multimedia content relating to at least one of said points of interest associated with the digital point of view of the user, said digital data of points of interest being dynamically variable depending on the movement of the user;
- organizing and providing to the user, through a digital display interface of a user's mobile device, said digital data of points of interest, dynamically variable, generated and/or derived, associated with the digital point of view of the user.

2. The method according to claim 1, wherein said step of providing or accessing a geolocated digital map comprises providing or accessing an immersive geolocated digital map and/or a virtual geolocated digital map corresponding to a "digital twin" of what is found in a geographical area represented by the "digital twin".

3. The method according to claim 1 or claim 2, wherein said step of obtaining or determining geolocation data of a user comprises obtaining or determining geolocation data comprising a position of the user, a direction of movement of the user, and a speed of the user.

4. The method according to claim 3, wherein said step of determining a digital point of view of the user comprises determining said digital point of view of the user in a dynamically variable manner, based on said position of the user, direction of movement of the user, and speed of the user.

5. The method according to any one of the preceding claims, wherein said step of generating and/or deriving digital data of points of interest comprises deriving digital data of points of interest from the geolocated digital map, and/or wherein said step of generating and/or deriving digital data of points of interest comprises generating digital data, by means of a trained artificial intelligence model.

6. The method according to any one of the preceding claims, wherein said step of organizing and providing to the user digital data of points of interest comprises generating and/or organizing and/or managing and/or distributing digital content optimized as a function of the movement/mobility of the user, delivering the data based on the dynamically variable digital point of view corresponding to the real point of view of the user,
wherein said step of generating and/or organizing and/or managing and/or distributing digital content optimized as a function of the movement/mobility of the user is carried out by means of a "moving content" definition algorithm, which establishes criteria for the production and distribution of the mobility-optimized content customized on the user.

7. The method according to claim 6, comprising the further step of producing and disseminating digital content in relation to position, direction, speed of the user, and/or comprising the further step of producing and disseminating digital content as a function of interests indicated by the user, by means of a trained artificial intelligence model.

8. The method according to claim 7, wherein the organization of the content generated by Artificial Intelligence is hierarchical, and/or wherein the organization of the content generated by Artificial Intelligence takes into account a predefined scale of geographical importance and/or wherein the organization of the content generated by Artificial Intelligence is multilingual and/or wherein the organization of the content generated by Artificial Intelligence is such that it adapts to different user-dependent narrative registers or presentation registers.

9. The method according to any one of the preceding claims, wherein said digital data of points of interest comprise descriptive data of the present appearance of one or more points of interest, or of all the points of interest visible from the point of view of the user,
and/or wherein said digital data of points of interest comprise descriptive data of the past appearance of one or more points of interest, or of all the points of interest visible from the point of view of the user, at a given time period, based on geolocated computer graphics image reconstructions and referring to said time period,
and/or wherein said digital data of points of interest comprise descriptive data of the future appearance of one or more points of interest, or of all the points of interest visible from the point of view of the user, based on renderings or digital reconstructions associated with a project referring to an area surrounding the point of view of the user.

10. The method according to any one of the preceding claims, comprising a bidirectional interaction between a user's mobile device and said at least one geolocated digital map, further comprising the steps of:
- transmitting to electronic processing means, where said at least one geolocated digital map is implemented, by the user's mobile device, said information relating to position, direction, and speed of the user;
- obtaining in the at least one geolocated digital map a visual recognition, for example by means of Computer Vision, of images and points of interest present in the digital point of view of the user, by said electronic processing means;
- deriving from the at least one geolocated digital map information relating to the elements recognized as present in the digital point of view of the user;
- creating descriptive content, based on said information derived, by the electronic processing means by means of artificial intelligence techniques;
- transmitting to the user's mobile device said created descriptive content, in one or more multimedia modes: audio commentary, text card, images, videos, 3D formats.

11. A method for developing contextual multimedia guides comprising:
- carrying out a method for producing, organizing, and distributing mobile georeferenced digital content, according to any one of claims 1-10, to obtain digital data of a plurality of points of interest, associated with a plurality of digital points of view of the user, dynamically variable as a function of the movement of the user;
- generating by means of artificial intelligence said contextual multimedia guides, based on parameters of position, direction and speed of the user and on the recognition of visual and informative elements present in geolocated immersive and/or virtual digital maps.

12. A system for producing, organizing, and distributing mobile georeferenced digital content, comprising a user's mobile device equipped with geolocation sensors and electronic processing means, operatively connected to the user's mobile device, comprising:
- at least one virtual reality and/or immersive map software application, associated with at least one geolocated digital map, configured to provide a three-dimensional visual model, and/or comprising other digital multimedia content, of each of a plurality of points of interest present in a geographical area covered by the geolocated digital map;
- a software application or program capable of implementing an infomobility algorithm, configured to obtain and/or determine and/or interpret geolocation data of a user, comprising at least one position of the user and information relating to the movement of the user, and to determine, based on said geolocation data of the user, a digital point of view of the user, within the geolocated digital map, representative of a real point of view of the user in real space, dynamically variable depending on the movement of the user, wherein said digital point of view is associated with at least one of said three-dimensional models present in the geolocated digital map, corresponding to points of interest visible from the real point of view of the user;
- a trained artificial intelligence model, adapted to generate digital data of points of interest, comprising at least one three-dimensional visual model and/or other digital multimedia content relating to at least one of said points of interest associated with the digital point of view of the user, said digital data of points of interest being dynamically variable depending on the movement of the user,
said trained artificial intelligence model being further adapted to organize and provide to the user, through a digital display interface of said user's mobile device, said generated and/or derived digital data of points of interest, dynamically variable, associated with the digital point of view of the user.

13. The system according to claim 12, wherein said at least one virtual reality software application comprises an immersive geolocated digital map and/or a virtual geolocated digital map corresponding to a "digital twin" of what is found in a geographical area represented by the "digital twin", wherein said at least one virtual reality software application is configured to display current digital reproductions of one or more points of interest or of the surrounding environment, in the present, and/or descriptive data of the past appearance of one or more points of interest, at a given time period, based on geolocated computer graphics image reconstructions and referring to said time period, and/or descriptive data of the future appearance of one or more points of interest, based on renderings or digital reconstructions associated with a project referring to an area surrounding the point of view of the user.

14. The system according to any one of claims 12-13, wherein the user's mobile device is further provided with direction and/or speed and/or movement sensors, and/or wherein the user's mobile device is further provided with at least one camera for visual recognition, and is configured to transmit to said electronic processing means information relating to position, direction, and speed of the user;
wherein the electronic processing means are further configured to:
- make a visual recognition, by means of Computer Vision, of images and points of interest present in the digital point of view of the user;
- derive, from the geolocated digital map, information relating to the elements recognized as present in the digital point of view of the user;
- create descriptive content, based on said information derived, by means of artificial intelligence techniques;
- transmit to the user's mobile device said created descriptive content.

15. The system according to any one of claims 12-14, wherein the trained artificial intelligence model is capable of generating and disseminating digital content in real time, based on a data entry by the user or from relevant sources, as a function of interests indicated by the user, and/or with hierarchical organization, and/or taking into account a predefined scale of geographical importance, and/or by multilingual content organization and/or by means of different narrative registers or presentation registers, dependent on the user.
